# EUROPEAN PATENT APPLICATION

(11) **EP 4 572 026 A1**
(43) Date of publication of application: **18.06.2025**
(21) Application number: 23216861.7
(22) Date of filing: 14.12.2023
(51) Int. Cl.: H01R 12/70, H01R 12/72, H01R 31/06, B60H 1/22, H01R 13/621, H01R 27/00

(54) **ELECTRICAL ADAPTOR AND ELECTRIC HEAT EXCHANGER**

(71) Applicant: MAHLE International GmbH, 70376 Stuttgart (DE)
(72) Inventor: Magnier, Gilles, 88250 La Bresse (FR); Cugny, Estelle, 68300 Saint-Louis (FR)
(74) Representative: Grauel, Andreas

(57) **Abstract**

The invention relates to an electrical adaptor (3), especially for an electric heat exchanger (2), having a base body (6) having a first side (7) and having a second side (8), the first side (7) of the base body (6) and the second side (8) of the base body (6) are located at the opposite sides of the base body (6), the base body (6) is provided with a first electric interface (9) on the first side (7) and the base body (6) is provided with a second electric interface (10) on the second side (8), the first electric interface (9) is designed to be mechanically and electrically connected with a control unit (1) whereas the second electric interface (10) is designed to be mechanically and electrically connected to a connector (4) of a power supply, whereas the base body (6) comprises at least two bus bars (12) which intersect the base body (6) from the first side (7) to the second side (8) creating each electric connectors (13, 14) on the first side (7) and on the second side (8). The invention further relates to an electric heat exchanger (2) having an electric adaptor.

## Description

### Technical field

The invention relates to an electrical adaptor, especially for an electric heat exchanger, especially for a motor vehicle.

### Background of the invention

Motor vehicles, especially electric driven motor vehicles have a need for electric heat exchangers to heat up the vehicle interior. Such electric heat exchangers are basically low-voltage applications or high-voltage applications depending on the provided heating power or the available electrical power supply within the motor vehicle.

It has been shown that the electrical connection of such an electric heat exchanger by way of electric connectors varies from car manufacturer to car manufacturer or from application to application such that the manufacturer of such electric heat exchangers has to cope with different designs of electric connectors for different projects. This means that the design of the electric connector of an electric heat exchanger has specifically to be designed for every application to be able to be used with the electric connector to be used by the car manufacturer for this specific application. This leads to an increased design work, additional tooling costs and over all to higher costs of the electric heater.

### Description of the invention, aim, solution, advantages

It is the aim of the invention to create a solution to allow a reduction of costs regarding the manufacturing of the electric heat exchanger.

The aim is solved by an adaptor with the features of claim 1.

One exemplary embodiment of the invention relates to an electrical adaptor, especially for an electric heat exchanger, having a base body having a first side and having a second side, the first side of the base body and the second side of the base body are located at the opposite sides of the base body, the base body is provided with a first electric interface on the first side and the base body is provided with a second electric interface on the second side, the first electric interface is designed to be mechanically and electrically connected with a control unit whereas the second electric interface is designed to be mechanically and electrically connected to a connector of a power supply, whereas the base body comprises at least two bus bars which intersect the base body from the first side to the second side creating each electric connectors on the first side and on the second side. An adaptor according to such features allows to connect e.g. a control unit to an external power supply and additionally allows to be a cost reduced solution.

According to an embodiment of the invention it is of advantage that the base body further comprises a third bus bar as a ground bus bar which intersects the base body from the first side to the second side creating an electric connector on the first side and on the second side. Therefore, the bus bars allow the electrical connection between the control unit and the connector of a power source.

According to another embodiment it is of advantage that the base body comprises first mechanical connecting means on the first side for the connection of the base body with the control unit and the base body further comprises second mechanical connecting means on the second side for the connection of the base body with the connector of a power supply. Therefore, the base body further comprises mechanical connection means on the first side for the mechanical fastening of the adaptor to the control unit, especially to a housing of the control unit. Furthermore, the base body comprises mechanical connecting means on the second side to allow a mechanical connection of the adaptor to the connector of the power supply. This prevents loosing the connection to the connector e.g. due to vibrations.

Furthermore, it is of advantage that the connectors on the first side are male connector elements, especially L-shaped male connector elements and/or the connectors on the second side are female connector elements, especially clamp-shaped female connector elements. The male type connectors of the first side allow a quick and safe direct connection to e.g. a cardboard of the control unit. The L-shaped design allows a connection to a cardboard from the top while reaching through the base body in a horizontal direction. The female type connectors of the second side allow a quick connection to a male connector of the power source.

Additionally, it is of advantage that the base body comprises a cylindrical hole in which the female connector elements are located and wherein the hole has an opening on one side for the insertion of the connector of the power supply. This design allows a penetration of the connector of the power supply within the hole to allow a firm and safe mechanical connection and a firm and durable electrical connection even under applied mechanical stress.

A further embodiment of the invention provides a solution that the first mechanical connecting means are made as pin type elements which stick out from a plane of the base body. This solution allows a quick and durable fastening of the adaptor to the control unit, e.g. to the housing of the control unit and it is of advantage that the direction of movement of the adaptor during the fastening process is the same as for generating the electrical connection with the connectors on the first side.

Furthermore, it is of advantage that the second mechanical connecting means are made as through holes intersecting the base body. This allows a fast connection of the connector to the base body e.g. by way of screws or bolts.

Additionally, it is of advantage that the base body comprises a sealing interface for a sealed connection with a housing of the control unit. Therefore, the base body of the adaptor can be used as part of a wall structure of the housing of the control unit and the base body can be integrated to the housing in a sealed manner.

The aim concerning the electric heat exchanger is solved with the features of claim 9.

An exemplary embodiment of the invention relates to an electric heat exchanger having heating means and a control unit for the control of the heating means whereas the control unit comprises an electrical adaptor according to the invention to allow an electrical and mechanical connection to a connector of a power supply and to allow a cost reduced manufacturing of the heat exchanger.

According to an embodiment of the invention it is of advantage that the control unit comprises a housing with at least one housing element which is in sealing contact with the adaptor at the sealing interface of the adaptor. This allows the sealed integration of the adaptor to the control unit preventing the intrusion of water and dirt into the control unit at the interface between the base body and the control unit.

Further advantageous designs are described by the following description of the figures and by the dependent claims.

### Short description of the drawing figures

In the following, the invention will be further explained based on several example embodiments using the drawing figures.

In the figures:
- Fig. 1: is a perspective representation of a control unit with an embodiment of an inventive adaptor,
- Fig. 2: is a perspective representation of an adaptor according to Fig. 1,
- Fig. 3: is a perspective representation of a control unit with another embodiment of an inventive adaptor, and
- Fig. 4: is a perspective representation of another adaptor.

### Preferred embodiment of the invention

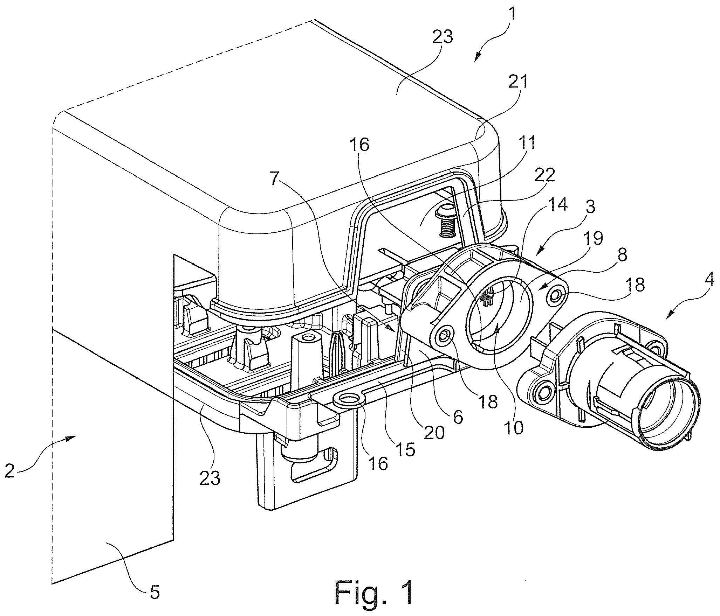

Figure 1 shows a perspective representation of an arrangement of a control unit 1 of an electric heat exchanger 2 with an electrical adaptor 3 to allow an electrical and mechanical connection of a connector 4 of a power supply, especially a high-voltage (HV) connection or a low-voltage (LV) connection.

The electric heat exchanger 2 has electric heating means 5 for heating e.g. air or another fluid in order to heat e.g. the cabin of a motor vehicle or other components e.g. a battery of a motor vehicle. Therefore, the electric heat exchanger 2 might be integrated in an air-conditioning unit of a motor vehicle and/or in a fluid circuit for the supply of components for heating such components.

The electric heat exchanger 2 further provides the control unit 1 for the control of the electric heating means 5.

In an exemplary embodiment of the invention the heating means 5 and the control unit 1 are connected such that they build a unit which can be installed as a single piece in a motor vehicle.

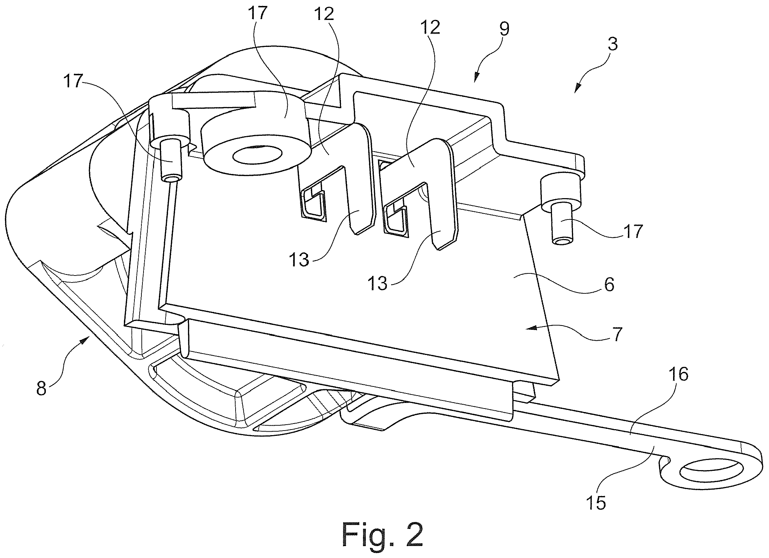

The electrical adaptor 3, as can be seen in Fig. 1 and Fig. 2, especially for an electric heat exchanger 2, has a base body 6 having a first side 7 and having a second side 8. The first side 7 of the base body 6 and the second side 8 of the base body 6 are located at the opposite sides of the base body 6. The base body 6 has a shape of a flat plate at which different features are arranged and located.

The base body 6 is provided with a first electric interface 9 on the first side 7 and the base body 6 furthermore is provided with a second electric interface 10 on the second side 8.

The first electric interface 9 is designed to be mechanically and electrically connected with a control unit 1 to allow a safe mechanical fastening of the electrical adaptor 3 to the control unit 1 and to allow a safe electric connection of the electrical adaptor 3 to the control unit 1. According to an aspect of the inventive embodiment the electric connection of the electrical adaptor 3 to the control unit 1 can be realised directly to an electric cardboard 11 of the control unit 1. Such electric cardboard 11 of the control unit 1 might be the cardboard 11 carrying the electronic components of the control unit 1, e.g. electronic circuits, electronic switches, sensors etc.

The second electric interface 10 is designed to be mechanically and electrically connected to a connector 4 of a power supply. This electric connection might be a plug-in connection, as can be seen in Fig. 1. The mechanical connection might be a plug-in connection and/or a form-fitting connection, which can be realised alternatively or additionally by the use of screws or bolts to connect the body of the connector 4 to the electrical adaptor 3.

As can be seen in Fig. 2 the base body 6 comprises at least two bus bars 12 which intersect the base body 6 from the first side 7 to the second side 8 creating each electric connectors 13, 14 on the first side 7 and on the second side 8. The bus bars 12 connect the first side 7 with the second side 8 electrically.

The connectors 13 on the first side 7 are designed as male connector elements, especially L-shaped male connector elements. The connectors 14 on the second side 8 are designed as female connector elements, especially clamp-shaped female connector elements.

Optionally, the base body 6 may further comprise a third bus bar 15 as ground bus bar which intersects the base body 6 from the first side 7 to the second side 8 creating an electric connector 16 on the first side 7 and on the second side 8.

Furthermore, the base body 6 comprises first mechanical connecting means 17 on the first side 7 for the connection of the base body 6 with the control unit 1 and the base body 6 further comprises second mechanical connecting means 18 on the second side 8 for the connection of the base body 6 with the connector 4 of a power supply.

It can be seen in Fig. 1 that the base body 6 comprises a cylindrical hole 19 in which the female connector elements 14 are located. Additionally, the hole 19 has an open end or an opening on one side for the insertion of the connector 4 of the power supply. On the other side the hole 19 is closed by the base body 6.

The first mechanical connecting means 17 are made as pin type elements which stick out from a plane of the base body 6. The plane is located at a right angle compared to the main body of the base body 6. Additionally, at least one through hole can be used as connecting means 17.

The second mechanical connecting means 18 are made as through holes intersecting the base body 6.

According to another aspect of the invention, the base body 6 comprises a sealing interface 20 for a sealed connection with a housing 21 of the control unit 1. The housing 21 has a further sealing interface 22 which interacts with the sealing interface 20 of the base body 6. This design allows to integrate the base body 6 as part of the housing 21 of the control unit 1.

The housing 21 is basically made of housing elements 23, e.g. like shells, which are mounted together and the base body 6 can sealingly be inserted in a free space to sealingly complete and close the housing 21.

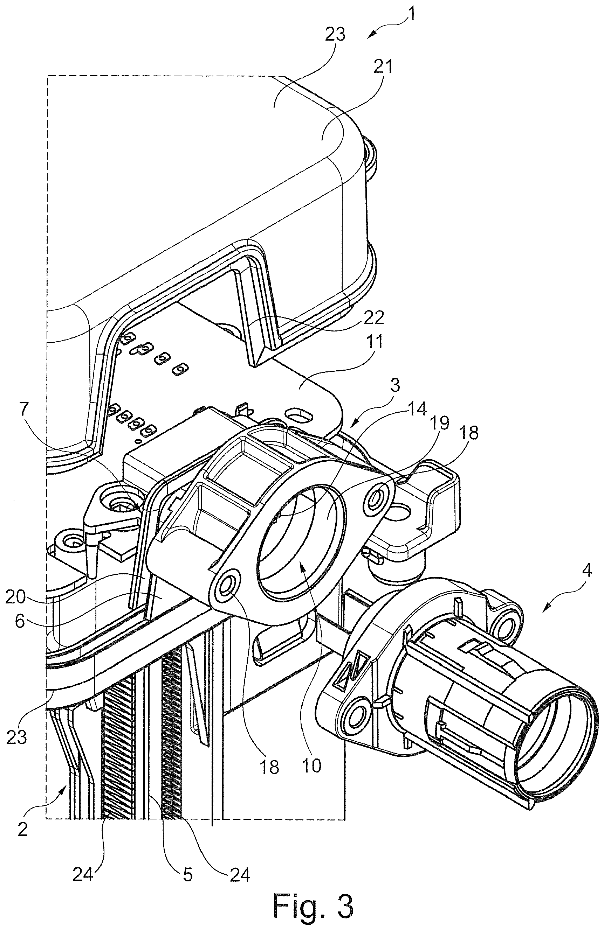

Figure 3 shows a perspective representation of an arrangement of a control unit 1 of an electric heat exchanger 2 with an electrical adaptor 3 to allow an electrical and mechanical connection of a connector 4 of a power supply, especially a high-voltage (HV) connection or a low-voltage (LV) connection.

In Figure 3 the electric heat exchanger 2 displays heating means 5 and radiator means 24. The heating means 5 are arranged in a staggering relationship with the radiator means 24 such that each heating means 5 has on both sides arranged a radiator means 24 to allow better heat transfer to the radiator means 24 and from the radiator means 24 to the air flow flowing through the radiator means 24. The radiator means 24 is e.g. made as corrugated fin element as can be seen in Figure 3.

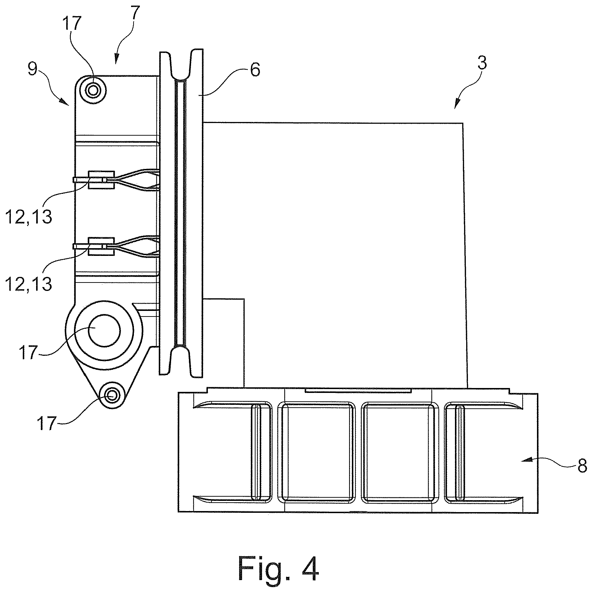

Figure 4 shows a further embodiment of an electrical adaptor 3 having a design with an angle of 90° between the first side 7 and the second side 8. The other features of the electrical adaptor 3 are almost identical to the electrical adaptor 3 according to Figures 1 and 2. For reference see the respective description above. In the design of Figure 4 the two sides of the base body 6 are located at an angle of 90° and they can be arranged even in another arrangement. As can be seen, they are located on opposite sides of the base body 6.

## Claims

1. An electrical adaptor (3), especially for an electric heat exchanger (2), having a base body (6) having a first side (7) and having a second side (8), the first side (7) of the base body (6) and the second side (8) of the base body (6) are located at the opposite sides of the base body (6), the base body (6) is provided with a first electric interface (9) on the first side (7) and the base body (6) is provided with a second electric interface (10) on the second side (8), the first electric interface (9) is designed to be mechanically and electrically connected with a control unit (1) whereas the second electric interface (10) is designed to be mechanically and electrically connected to a connector (4) of a power supply, **characterised in that** the base body (6) comprises at least two bus bars (12) which intersect the base body (6) from the first side (7) to the second side (8) creating each electric connectors (13, 14) on the first side (7) and on the second side (8).

2. The electrical adaptor (3) according to claim 1, **characterised in that** the base body (6) further comprises a third bus bar (15) as ground bus bar which intersects the base body (6) from the first side (7) to the second side (8) creating an electric connector (16) on the first side (7) and on the second side (8).

3. The electrical adaptor (3) according to claims 1 or 2, **characterised in that** the base body (6) comprises first mechanical connecting means (17) on the first side (7) for the connection of the base body (6) with the control unit (1) and the base body (6) further comprises second mechanical connecting means (18) on the second side for the connection of the base body (6) with the connector (4) of a power supply.

4. The electrical adaptor (3) according to claims 1, 2 or 3, **characterised in that** the electric connectors (13) on the first side (7) are male connector elements, especially L-shaped male connector elements and/or the electric connectors (14) on the second side (8) are female connector elements, especially clamp-shaped female connector elements.

5. The electrical adaptor (3) according to claim 4, **characterised in that** the base body (6) comprises a cylindrical hole (19) in which the female connector elements are located and wherein the hole (19) has an opening on one side for the insertion of the connector (4) of the power supply.

6. The electrical adaptor (3) according to claim 3 and/or 4, **characterised in that** the first mechanical connecting means (17) are made as pin type elements which stick out from a plane of the base body (6).

7. The electrical adaptor (3) according to claim 3, 4 and/or 5, **characterised in that** the second mechanical connecting means (18) are made as through holes intersecting the base body (6).

8. The electrical adaptor (3) according to one of the preceding claims, **characterised in that** the base body (6) comprises a sealing interface (20) for a sealed connection with a housing (21) of the control unit (1).

9. A heat exchanger (2) having heating means (5) and a control unit (1) for the control of the heating means (5) **characterised in that** the control unit (1) comprises an electrical adaptor (3) according to at least one of the preceding claims.

10. The heat exchanger (2) according to claim 9, **characterised in that** the control unit (1) comprises a housing (21) with at least one housing element (23) which is in sealing contact with the electrical adaptor (3) at the sealing interface (20) of the electrical adaptor (3).
